# EUROPÄISCHE PATENTSCHRIFT

(11) **EP 0 630 307 B1**
(45) Veröffentlichungstag und Bekanntmachung des Hinweises auf die Patenterteilung: **12.02.1997**
(21) Anmeldenummer: 93905163.7
(22) Anmeldetag: 04.03.1993
(51) Int. Cl.: B23B 29/04, B23B 27/00, B23B 29/20, B23Q 17/22, B23C 5/22

(54) **WERKZEUGHALTER FÜR EIN SCHNEIDWERKZEUG**
TOOL HOLDER FOR A CUTTING TOOL
PORTE-OUTIL POUR UN OUTIL COUPANT

(30) Priorität: 05.03.1992 DE 4207353
(43) Veröffentlichungstag der Anmeldung: 28.12.1994
(73) Patentinhaber: Beuthan, Barbara, 12619 Berlin (DE)
(72) Erfinder: Beuthan, Barbara, 12619 Berlin (DE)
(74) Vertreter: Röhnicke, Heinz
(86) Internationale Anmeldenummer: DE9300206
(87) Internationale Veröffentlichungsnummer: WO9317821

(56) Entgegenhaltungen:
- EP-A- 0 075 148
- DE-C- 814 987
- FR-A- 1 001 082
- GB-A- 1 463 736
- US-A- 3 731 565

## Beschreibung

Die Erfindung betrifft eine Werkzeughalteraufnahmevorrichtung mit einem darin aufgenommenen Werkzeughalter mit einem Werkzeugkopf für ein Schneidwerkzeug, wobei der Werkzeughalter in eine Öffnung derselben hineinragt und durch eine Kupplungsvorrichtung in axialer Richtung in seiner Bewegung arretiert ist sowie zur Vermeidung einer Drehbewegung ein Führungsteil aufweist, an dessen unterer Seite eine in axialer Richtung verlaufende erste Führung angeordnet ist, die mit einer gleichartigen Nut in der Werkzeughalteraufnahmevorrichtung in Wirkverbindung steht, während auf der, der ersten Führung gegenüberliegenden, Seite der Führungsteil eine ebenfalls in axialer Richtung verlaufende Führung aufweist, wobei der Führungsteil im mittleren Abschnitt des Werkzeughalters angeordnet ist und an der zweiten Führung ein in der Werkzeughalteraufnahmevorrichtung in Richtung der zweiten Führung verschiebbar angeordneter Spannkeil eingreift (siehe DE-U-80 01 813).

Werkzeughalter, die über eine Kupplungsvorrichtung mit einer Werkzeughalteraufnahme in Verbindung stehen, sind in den vielfältigsten Ausführungen bekannt. Aus der DE-C-27 60 399 ist eine Spannvorrichtung zum Einspannen eines Schneidwerkzeuges bekannt, bei der zur Festlegung des Werkzeughalters im Werkzeugträger gegen eine Drehbewegung sowie eine Axialbewegung die Sperrglieder Verriegelungskugeln sind, die in Ausnehmungen beweglich sind und durch eine zentrale Druckkugel als Kurvenkörper unter Steuerung durch ein in dem Werkzeugträger verschiebbar angeordnetes Stellglied in eine Verriegelungsstellung gebracht werden können, in der sie gegen Anschlagschultern gedrückt sind. Diese Spannvorrichtung ist eine relativ aufwendige Ausführung.

Durch die EP-A-0 247 410 ist eine Kupplung zur Verbindung von Werkzeugkopf und Werkzeughalter an Werkzeugmaschinen bekannt. Hierbei ragt der Werkzeugkopf über einen Aufnahmezapfen in eine Aufnahmebohrung des Werkzeughalters hinein. Axial zum Aufnahmezapfen ist eine Spindel vorgesehen, die mit ihrem Gewinde mit dem Innengewinde einer ebenfalls im Werkzeugkopf gelagerten Mutter zusammenwirkt, die eine Schneckenverzahnung besitzt, die nun wieder mit einer ebenfalls im Werkzeugkopf gelagerten Schnecke zusammenwirkt, die senkrecht zur Spindel angeordnet ist. Da diese Schnecke aus dem Werkzeugkopf herausragt, kann sie mit Hilfe eines Schlüssels gedreht werden, so daß bei einer Rechtsdrehung der Schnecke sich die Spindel nach links verschiebt. Das aber bedeutet, daß über schräge Gleitflächen des Kopfes der Spindel in einem Raum in der Aufnahmebohrung des Werkzeughalters gelagerte und entsprechend geformte Gleitsteine in eine entsprechende Ausnehmung der Aufnahmebohrung des Werkzeughalters geschoben werden, wodurch die Verriegelung des Werkzeugkopfes im Werkzeughalter und damit eine kraftschlüssige Verbindung des axialen Anlagebundes des Werkzeugkopfes mit der entsprechenden Gegenfläche des Werkzeughalters erfolgt. Dieser Werkzeughalter weist einen komplizierten Aufbau auf. Durch die EP-A-0 178 417 ist ein teilbares Werkzeug für die spanabhebende Bearbeitung bekannt, bei der der, die Werkzeugschneide tragende, Werkzeugkopf über einen Führungsbolzen in eine Aufnahmebohrung des Werkzeughalters hereinragt und beide durch eine Kupplungsvorrichtung verbunden sind. Hierbei erfolgt die Verriegelung des Werkzeugkopfes im Werkzeughalter durch einen drehbar gelagerten Spannkörper, der mit einer Umfangs-Rampenfläche versehen ist, die in die Bewegungsbahn der Spannfläche am Führungsbolzen hineingedreht wird und die dabei den Werkzeugkopf am Werkzeughalter festspannt. Dieser ist kompliziert in seinem Aufbau, und eine Störanfälligkeit durch Verschmutzung ist gegeben. Diese Nachteile weist auch der Werkzeughalter gemäß des DE-U-86 05 098 auf, der aus einem Werkzeugschaft und aus einem Werkzeugkopf besteht, die mittels einer Kupplung miteinander verbunden sind. Dabei besteht die Kupplung aus einer mit dem Werkzeugkopf lösbar verbindbaren, einstellbaren Halteeinrichtung und aus miteinander in Eingriff bringbaren, stirnseitigen Profilflächen am Werkzeugkopf und am Werkzeugschaft. Die Halteeinrichtung besitzt einen druckfederbelasteten Zuganker, der durch einen Exzenter in den Werkzeugschaft koaxial zu dessen Längsachse verschiebbar ist und weist ferner an einem der Druckfeder abgewandten Endabschnitt ein Halteglied auf, das in den Werkzeugkopf lösbar eingeschoben ist.

Durch das DE-U-89 02 529 ist ein Innendrehmeißel mit einem Klemmhalter, einem Hakenwerkzeug, das einen Schaft hat, der an seinem hakenförmig abgebogenen Ende mit einer Schneide versehen ist sowie einer Aufnahmeaussparung im Klemmhalter, die für die Aufnahme des Schaftes des Hakenwerkzeuges vorgesehen ist, und einer Klemmschraube, mittels derer der Schaft des Hakenwerkzeuges in der Aufnahmeaussparung des Klemmhalters festklemmbar ist, bekannt, wobei die Aufnahmeaussparung an einer Seite eine Erweiterung mit einander zugekehrten Wänden aufweist, die Spannflächen bilden, die von der Längsachse der Aufnahmeaussparung radial nach außen konvergieren und der Schaft des Hakenwerkzeuges für den Eingriff in die Erweiterung der Aufnahmeaussparung mit einem vorspringenden Bart versehen ist, der radial nach außen konvergierende Anlageflächen für die Anlage an den Spannflächen der Erweiterung aufweist sowie die Klemmschraube im wesentlichen diametral gegenüber der gegebenenfalls gedachten Schnittlinie der beiden Spannflächen angeordnet ist.

Bei dieser Lösung wird der Innendrehmeißel in dem Klemmhalter durch die nach außen konvergierenden Spannflächen formschlüssig geführt, wobei die Klemmschraube die Teile durch seitlichen Druck kraftschlüssig miteinander verbindet. Eine Fixierung des Innendrehmeißels in Längsrichtung wird lediglich durch die Anlage an einen Anschlag sowie den seitlichen Andruck erreicht. Hierdurch ist der Innendrehmeißel zwar gegen ein Verdrehen gesichert, jedoch eine genaue Lagefixierung insbesondere in Längsrichtung ist nicht möglich.

Durch die DE-U-80 01 813 ist ein Abstech- und Einstechwerkzeug bekannt, bei dem das im wesentlichen rechtwinklig ausgebildete Trägerblatt zwei abgeschrägte Längskanten aufweist. Dieses Trägerblatt nimmt an seinem vorderen Ende den wechselbaren Schneideinsatz auf. Es ist in einer Führung seitlich an einem Spannschaft angeordnet und mit Hilfe einer Klammer sowie einer Klemmschraube mit der gewünschten Auskragung im Spannschaft festgelegt. Dabei ist das Trägerblatt bei gelöster Klemmschraube frei in Längsrichtung entlang dem Spannschaft verschiebbar. Durch das seitliche Anliegen an dem Spannschaft und einer entsprechenden Führung über seinen abgeschrägten Längskanten wird ein Verdrehen weitgehend vermieden, jedoch eine genaue Lagefixierung in Längsrichtung ist nicht möglich. Die Befestigung mit einer Klemmschraube birgt auch die Gefahr einer Verschiebung in Längsrichtung während der Bearbeitung eines Werkstückes mit sich. Weiterhin werden seitliche Kräfte, wie sie bei Drehmeißeln auftreten, durch diese Lösung nicht ausreichend aufgenommen.

Es ist weiterhin durch die GB-A-14 63 736 und die DE-C-814 987 bekannt, ein Schneidwerkzeug in Längsrichtung zu fixieren. Hierbei sind bei beiden Lösungen am hinteren Ende des Schneidwerkzeuges eine nach hinten offene Längsnut angeordnet. Mit dieser Längsnut wird das Schneidwerkzeug gegen einen in der Werkzeughalteraufnahmevorrichtung fest angebrachten Arretierbolzen geschoben. Der Arretierbolzen bildet einen einfachen Anschlag, der dazu beiträgt, daß ein Verdrehen des Schneidwerkzeuges weitgehend vermieden wird, eine genaue Lagefixierung in Längsrichtung ist jedoch durch ein derartiges Aufschieben auf einen Stift nicht möglich.

Das lagegerechte Einspannen von mehreren Schneidwerkzeugen, das heißt eine Einstellung der Schneidwerkzeuge, insbesondere von Drehwerkzeugen in Längs- und Querrichtung, in einem NC-Automaten oder einer Revolverdrehmaschine ist mit den bekannten Werkzeughaltern sehr aufwendig. Damit ergeben sich bei der Auswechselung von Werkzeugen ständig längere Maschinenausfallzeiten. Diese wirken sich bei der Fertigung von Kleinserien auf derartige Maschinen nachteilig aus.

Dieses trifft aber auch für Fräsköpfe zu, die mehrere Schneidköpfe aufweisen. Hierbei ist es bekannt, daß bei festen Plattensitzen bei Verschleiß der gesamte Fräskopf regeneriert werden muß. Dieses ist ebenfalls mit einem hohen Arbeitsaufwand und Maschinenausfallzeiten und damit Kosten verbunden. Bei der Montage eines derartig regenerierten Fräskopfes ist es erforderlich, die Werkzeugmaschine neu einzurichten.

Der Erfindung liegt die Aufgabe zugrunde, eine Werkzeughalteraufnahmevorrichtung mit einem darin aufgenommenen Werkzeughalter mit einem Werkzeugkopf für ein Schneidwerkzeug, wobei der Werkzeughalter in eine Öffnung derselben hineinragt und durch eine Kupplungsvorrichtung in axialer Richtung in seiner Bewegung arretiert ist, sowie zur Vermeidung einer Drehbewegung ein Führungsteil aufweist, an dessen unterer Seite eine in axialer Richtung verlaufende erste Führung angeordnet ist, die mit einer gleichartigen Nut in der Werkzeughalteraufnahmevorrichtung in Wirkverbindung steht, während auf der, der ersten Führung gegenüberliegenden, Seite der Führungsteil eine ebenfalls in axialer Richtung verlaufende Führung aufweist, wobei der Führungsteil im mittleren Abschnitt des Werkzeughalters angeordnet ist und an der zweiten Führung ein in der Werkzeughalteraufnahmevorrichtung in Richtung der zweiten Führung verschiebbar angeordneter Spannkeil eingreift, zu schaffen, die bei einem einfachen Aufbau und einer geringen Störanfälligkeit sowie einem breiten Einsatzgebiet eine Fixierung des Werkzeughalters gegen Verdrehen und in axialer Richtung ermöglicht.

Erfindungsgemäß wird die Aufgabe dadurch gelöst, daß die zweite Führung als Führungsnut ausgebildet ist und der hintere Abschnitt des Werkzeughalters als ein Schaft ausgebildet ist, an dem eine Längenarretierung angeordnet ist, deren hintere Fläche einen vertikalen Längensitz bildet, wobei die zum Einsatz kommende Schneidenkante des Werkzeugkopfes zu dem Längensitz in einem vorbestimmten Längenabstand angeordnet ist und in die Längenarretierung eine in der Werkzeughalteraufnahmevorrichtung vertikal zur Längsachse des Werkzeughalters verschiebbar angeordnete, feststellbare, bündig an dem Längensitz anliegende Spannbacke eingreift, wobei während des Spannvorgangs die Spannbacke vor dem Spannkeil den Werkzeughalter in seiner Lage fixiert.

Während bei der erfindungsgemäß ausgebildeten Werkzeughalteraufnahmevorrichtung eine Drehbewegung des Werkzeughalters bereits durch die in Längsrichtung verlaufende Führung im Zusammenwirken mit der Nut in der Werkzeughalteraufnahmevorrichtung sowie durch den Spannkeil im Zusammenwirken mit der Führungsnut in dem Führungsteil vermieden wird, ist eine zusätzliche Sicherheit zur Vermeidung einer Drehbewegung des Werkzeughalters dadurch gegeben, daß der Führungsteil einen rechteckförmigen Querschnitt besitzt, wobei die Öffnung innerhalb der Werkzeughalteraufnahmevorrichtung dann ebenfalls einen rechteckförmigen Querschnitt aufweist.

In einer bevorzugten Ausführungsform ist die Längenarretierung des Werkzeughalters als eine Ausdrehung im Schaft ausgebildet, deren vordere Seite konusförmig ist und deren hintere Seite durch den vertikalen Längensitz gebildet ist.

Nach einer bevorzugten Ausführungsform der Erfindung ist die Werkzeughalteraufnahmevorrichtung ein Bearbeitungsmagazin, in dem mehrere Werkzeughalter mit den zugehörigen Spannkeilen und Spannbacken zusammengefaßt sind, wobei das Bearbeitungsmagazin über eine Spannstelle mit einem Maschinenkopf verbunden ist. Besonders vorteilhaft ist es dabei, wenn das Bearbeitungsmagazin an einer Revolverdrehmaschine oder einem NC-Automaten verwendet wird.

Mit einer derartigen Werkzeughalteraufnahmevorrichtung mit mehreren Werkzeughaltern kann die Bearbeitung der Werkstücke erweitert und beschleunigt werden. Es sind auch Profilwerkzeuge und andere Sonderformen in das Bearbeitungsmagazin aufnehmbar. Die Zeiten für einen Werkzeugwechsel und ein Programmieren der Maschine sind besonders dadurch verringerbar, daß der seitliche Abstand zwischen der zum Einsatz kommenden Schneidenbreite des Werkzeugkopfes und der in Längsrichtung verlaufenden Achse entlang der Schaftmitte jedes Werkzeughalters konstant ist. Dabei ist es vorteilhaft, wenn der Abstand zwischen der Achse eines jeden Werkzeughalters sowie einem Referenzpunkt ebenfalls konstant ist.

Eine weitere bevorzugte Ausbildung der Erfindung besteht darin, daß die Werkzeughalteraufnahmevorrichtung ein Fräskopf ist, in dem mehrere Werkzeughalter mit den zugehörigen Spannkeilen und Spannbacken zusammengefaßt sind. Dabei können die Werkzeughalter in dem Fräskopf in mehreren unabhängig voneinander spannenden Spannstellen gruppenweise zusammengefaßt sein. Hierdurch wird das Auswechseln der Schneidwerkzeuge vereinfacht, da nur die Spannstelle gelöst wird, in deren Bereich die Auswechselung erfolgt.

Um eine optimale Zerspanungsleistung zu erreichen, ist es zweckmäßig, daß die Werkzeughalter durch die Spannkeile entgegen der Fräsrichtung gespannt sind, wobei der Fräskopf den Werkzeugkopf von der hinteren Seite stützende Halterungen aufweist. Damit ist eine Schwerzerspanung möglich.

Das Auswechseln einzelner Werkzeuge kann an der Werkzeugmaschine erfolgen, ohne daß eine Beeinträchtigung der Rundlaufkonstante des Fräskopfes erfolgt. In bevorzugter Weise ist der Werkzeugkopf mit Schneidplatten versehen.

Weiterhin kann bei einer weitergebildeten Lösung der Werkzeughalter über den Spannkeil sowie die Spannbacke hydraulisch bzw. pneumatisch spannbar sein.

Diese wirkt sich nicht nur günstig auf einen schnellen Werkzeugwechsel aus, sondern auch auf eine kraftschlüssige Verbindung zwischen der Spannbacke und der Längenarretierung, also auf die Festlegung des Werkzeughalters in axialer Richtung und somit auf eine genaue Einstellung des Werkzeuges an dem Werkzeugkopf.

Ein Ausführungsbeispiel der Erfindung soll nachstehend näher erläutert werden. In den zugehörigen Zeichnungen zeigen:
- Fig. 1: eine Vorderansicht einer Werkzeughalteraufnahmevorrichtung in schematischer Darstellung mit einem Werkzeughalter,
- Fig. 2: den Schnitt A-A nach Fig. 1,
- Fig. 3: die Draufsicht auf einen Werkzeughalter mit einem Innendrehmeißel,
- Fig. 4: einen Schnitt der Werkzeughalteraufnahmevorrichtung nach Fig. 1 in Höhe des Spannkeiles mit dem Werkzeughalter,
- Fig. 5: einen Ausschnitt eines Bearbeitungsmagazins, in dem mehrere Werkzeughalter nach Fig. 1 zusammengefaßt sind in schematischer Darstellung,
- Fig. 6: eine Draufsicht auf einen Fräskopf mit mehreren Werkzeughaltern nach Fig. 1 in teilweiser und schematischer Darstellung,
- Fig. 7: eine Draufsicht auf Werkzeughalter nach Fig. 1 mit als Drehmeißel ausgebildeten Werkzeugköpfen.

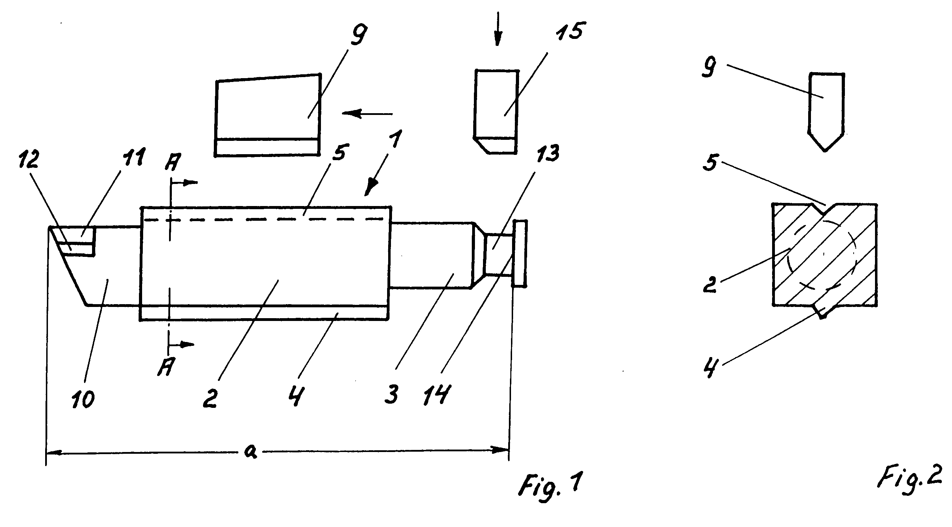

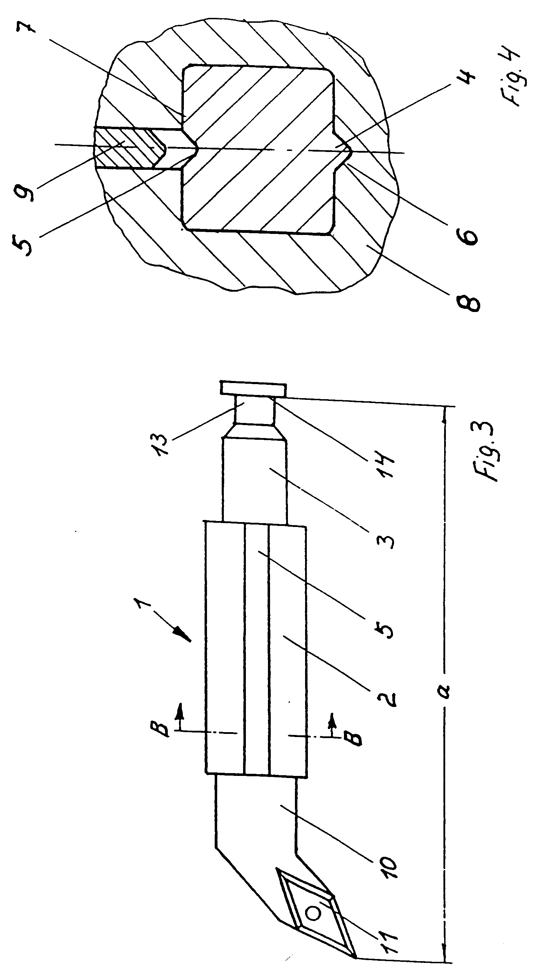

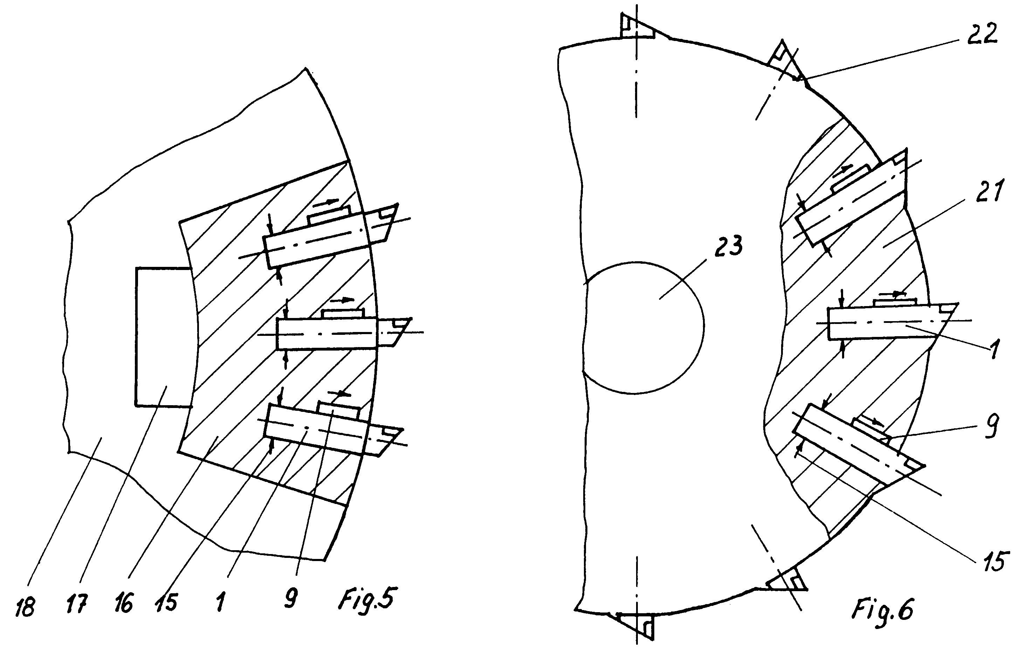

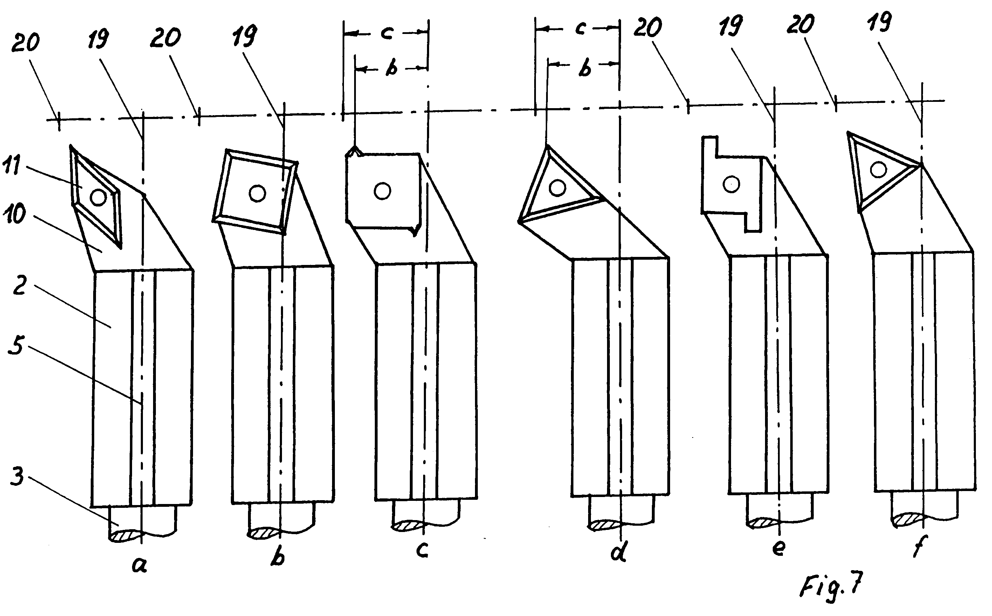

Wie die Fig. 1 und 2 zeigen, weist der Werkzeughalter 1 in seinem mittleren Abschnitt ein Führungsteil 2 mit einem rechteckförmigen Querschnitt, der in Längsrichtung des Werkzeughalters 1 verläuft, auf. Der Führungsteil 2 kann aber auch als ein Vieleck ausgebildet sein. Während der Führungsteil 2 des Werkzeughalters 1 auf seiner unteren Seite mit einer in axialer Richtung verlaufenden ersten Führung 4 versehen ist, besitzt er auf seiner oberen Seite eine ebenfalls in axialer Richtung verlaufende zweite Führung 5, die als eine Führungsnut ausgebildet ist. Die Führung 4 wird, wie Fig. 4 zeigt, von einer Nut 6, die eine Öffnung 7 zur Aufnahme des Werkzeughalters 1 innerhalb einer Werkzeughalteraufnahmevorrichtung 8 angeordnet ist, aufgenommen. In die zweite Führung 5 greift ein in der Werkzeughalteraufnahmevorrichtung 8 verschiebbar angeordneter Spannkeil 9 ein, der nach dem Erreichen der Endstellung des Werkzeughalters 1 innerhalb der Öffnung 7 der Werkzeughalteraufnahmevorrichtung 8 den Werkzeughalter 1 gegen Drehung fixiert, wozu auch die erste Führung 4 im Zusammenwirken mit der Nut 6 innerhalb der Öffnung 7 dient. Dabei kann die erste Führung 4 aus mehreren Teilen bestehen. Es ist möglich, daß an der oberen Seite des Führungsteils 2 die zweite Führung 5 in Form der Führungsnut in der Mitte verläuft, während an der unteren Seite in nicht dargestellter Weise zwei Führungen 4 auf beiden Seiten angeordnet sind, so daß diese gemeinsam eine besonders sichere Führung bilden. An seinem hinteren Ende weist der Werkzeughalter 1 einen Schaft 3 auf, der mit einer Längenarretierung 13 versehen ist, in die eine in Fig. 1 angedeutete, in der Werkzeughalteraufnahmevorrichtung 8 verschiebbar angeordnete, feststellbare Spannbacke 15 eingreift. Die Längenarretierung 13 ist in Fig. 1 als eine Ausdrehung in dem Schaft 3 dargestellt, wobei deren vordere Seite konusförmig und deren hintere Seite vertikal ausgebildet ist. Diese hintere Seite bildet dabei einen Längensitz 14. Die Spannbacke 15 besitzt die Form der Ausdrehung, so daß durch Anlage ihrer hinteren, vertikal ausgebildeten Seite an den vertikalen Längensitz 14 des Werkzeughalters 1 dieser in Längsrichtung in der Werkzeughalteraufnahmevorrichtung 8 fixiert ist. Von dem Längensitz 14 aus wird der Längenabstand a bis zu der zum Einsatz kommenden Schneidenkante des Werkzeugkopfes 10 bestimmt.

An dem vorderen Ende des Werkzeughalters 1 ist der Werkzeugkopf 10 angeordnet. An diesem ist die Werkzeugschneide angeordnet, wobei diese in einer bevorzugten Ausführungsform als eine Schneidplatte 11 in Form einer auswechselbaren Wendeplatte ausgebildet ist. Um eine Beschädigung des Werkzeugkopfes 10 zu vermeiden, ist unter der Schneidplatte 11 eine Grundplatte 12 vorgesehen, auf der diese aufliegt. Die Form der Schneidplatte 11 ist entsprechend dem Einsatzzweck unterschiedlich.

In Fig. 3 sowie in Fig. 7 a - f sind unterschiedliche Schneidenformen dargestellt, wobei der Einsatz nicht auf diese begrenzt ist. Es ist auch der Einsatz kreisförmiger Schneidplatten 11 und anderer Formen möglich.

Der Werkzeughalter 1 ist vorzugsweise einstückig ausgebildet, wodurch eine besonders hohe Festigkeit desselben erreicht wird. Dabei kann der Führungsteil 2 quadratisch ausgebildet und in den im Einsatz befindlichen Größen von 16; 20; 25; 30 mm gefertigt sein.

In Fig. 3 ist ein Werkzeughalter 1 dargestellt, dessen Werkzeugkopf 10 als ein Drehmeißel für die Innenbearbeitung von Werkstücken ausgebildet ist. Hierbei ist die Einhaltung des Längenabstandes a von besonderer Bedeutung. Damit ist ein lagegerechtes Einspannen desselben bei einer Auswechselung gewährleistet.

In Fig. 4 ist, wie bereits beschrieben, die Anordnung des Werkzeughalters 1 in der Werkzeughalteraufnahmevorrichtung 8 dargestellt. Dabei wird die Sitzgenauigkeit des Werkzeughalters 1 in dieser wesentlich durch die Paßgenauigkeit der einzelnen Elemente bestimmt. Aufgrund der einfachen geometrischen Formen ist es möglich, die Teile mit hoher Paßgenauigkeit herzustellen. Die Arretierung erfolgt in an sich bekannter Weise durch den Spannkeil 9.

Aus Fig. 5 ist ersichtlich, daß die Werkzeughalter 1 gemäß Fig. 1 und 2 in einem Bearbeitungsmagazin 16, welches eine mehrteilige Werkzeughalteraufnahmevorrichtung 8 bildet, zusammengefaßt sind. Dieses Bearbeitungsmagazin 16 kann Bestandteil eines Maschinenkopfes 18 in Form eines Revolverkopfes sein und in Revolverdrehmaschinen, aber auch in NC-Automaten eingesetzt werden. Hierbei kommen mehrere Werkzeughalter 1 zur Anwendung. Das bedeutet, daß zur Festsetzung einer Drehbewegung der Werkzeughalter 1 jedem Werkzeughalter 1 ein im Bearbeitungsmagazin 16 verschiebbar angeordneter Spannkeil 9 zugeordnet ist. Analog ist jedem Werkzeughalter 1 aber auch eine im Bearbeitungsmagazin 16 verschiebbar angeordnete, feststellbare, bündig an der Längenarretierung 13 (Fig. 1) anliegende Spannbacke 15 zugeordnet, durch die über den vertikalen hinteren Längensitz 14 eine exakte Festlegung der Werkzeughalter 1 in axialer Richtung erfolgt. Dabei können die Spannbacken 15 sowohl hydraulisch als auch pneumatisch spannbar sein. Über die Spannstelle 17 ist das Bearbeitungsmagazin 16 in an sich bekannter Weise mit dem Maschinenkopf 18 der entsprechenden Drehmaschine, wie einem NC-Automaten, verbunden.

Die Einspannung ist schematisch durch Pfeile in Fig. 5 gekennzeichnet.

In Fig. 6 ist die Anordnung von mehreren Werkzeughaltern 1 in einem Fräskopf 21, der damit die Werkzeughalteraufnahmevorrichtung 8 bildet, schematisch dargestellt. Der Fräskopf 21 ist in an sich bekannter Weise über einen Aufnahmekegel 23 in einer Werkzeugmaschine einspannbar. Die Werkzeughalter 1 sind am Umfang des Fräskopfes 21 so angeordnet, daß der Werkzeugkopf 10 mit der Schneidplatte 11 fest abgestützt ist. Hierzu kann auf der Rückseite des Werkzeughalters 1 eine Halterung 22 vorgesehen sein, die eine sichere Auflage gewährleistet.

Durch den erfindungsgemäßen Werkzeughalter 1 ist es möglich, die Werkzeugschneide des Werkzeugkopfes 10 in einen vorbestimmten Längenabstand a vom Längensitz 14 anzuordnen. Damit ist seine Lage in axialer Richtung im Fräskopf 21 fixiert, so daß auch bei Auswechselung einzelner Schneidwerkzeuge die Rundlaufkonstante des Fräskopfes 21 erhalten bleibt. Der Werkzeugkopf 10 ist ebenfalls, wie in Fig. 1 dargestellt, mit einer Schneidplatte 11 und einer darunter angeordneten Grundplatte 12 versehen, wobei die Schneidplatten 11 die für Fräsköpfe 21 typischen Formen aufweisen. Die Einspannung erfolgt ebenfalls über Spannkeile 9 sowie Spannbacken 15 der Werkzeughalteraufnahmevorrichtung 8. Dabei ist es in nicht dargestellter Weise möglich, die Werkzeughalter 1 in mehreren voneinander unabhängigen Spannstellen zusammenzufassen. Damit ist es möglich, an der Werkzeugmaschine einzelne Schneidwerkzeuge auszuwechseln, ohne daß andere unbeabsichtigt aus ihrer Werkzeughalteraufnahmevorrichtung 8 fallen. In Fig. 6 sind mehrere Werkzeughalter 1, die in einem Bearbeitungsmagazin 16 (Fig. 5) zum Einsatz kommen können, dargestellt.

Es sind weiterhin Werkzeugköpfe 10 mit unterschiedlichen Schneidenausbildungen dabei gezeigt. Die Werkzeugköpfe 10 sind als rechtsschneidende Drehmeißel dargestellt.

Es zeigen hierbei die
- Fig. 7a einen Spitzdrehmeißel
- Fig. 7b einen Plandrehmeißel
- Fig. 7c einen Gewindestahl
- Fig. 7d einen Schrupp- oder Schlichtmeißel
- Fig. 7e einen Stichmeißel
- Fig. 7f einen Seitendrehmeißel.

Diese Schneidwerkzeuge sind eine Auswahl, wobei diese noch erweitert werden kann.

Es sind natürlich auch andere Schneidwerkzeuge, wie linksschneidende Drehmeißel oder auch Innendrehmeißel (Fig. 3), und auch Schneidwerkzeuge für Fräsköpfe möglich.

Bei dem Einsatz, insbesondere von rechts- oder linksschneidenden Drehmeißeln, ist neben der Einhaltung eines vorbestimmten Längenabstandes a die Einhaltung eines vorbestimmten seitlichen Abstandes zu einem Referenzpunkt 20 in der Werkzeugmaschine erforderlich. Dieses trifft besonders bei dem Einsatz in Bearbeitungsmagazinen 16 (Fig. 5) zu.

Um dieses zu erreichen, ist es erforderlich, daß der seitliche Abstand b zwischen der zum Einsatz kommenden Schneidenkante des Werkzeugkopfes 10 und der in Längsrichtung verlaufenden Achse 19 entlang der Schaftmitte jedes Werkzeughalters 1 konstant ist, wobei der seitliche Abstand c zwischen der Achse 19 eines jeden Werkzeughalters sowie dem Referenzpunkt 20 ebenfalls konstant ist.

In Fig. 7 ist dargestellt, daß dieses bei den Werkzeughaltern 1 mit unterschiedlichen Werkzeugköpfen 10 möglich ist.

Hierdurch wird in einfacher Weise ein lagegerechtes Einspannen des Schneidwerkzeuges ohne Maschinenkorrektur möglich.

## Patentansprüche

1. Werkzeughalteraufnahmevorrichtung (8) mit einem darin aufgenommenen Werkzeughalter (1) mit einem Werkzeugkopf (10) für ein Schneidwerkzeug, wobei der Werkzeughalter (1) in eine Öffnung (7) derselben hineinragt und durch eine Kupplungsvorrichtung in axialer Richtung in seiner Bewegung arretiert ist, sowie zur Vermeidung einer Drehbewegung ein Führungsteil (2) aufweist, an dessen unterer Seite eine in axialer Richtung verlaufende erste Führung (4) angeordnet ist, die mit einer gleichartigen Nut (6) in der Werkzeughalteraufnahmevorrichtung (8) in Wirkverbindung steht, während auf der, der ersten Führung (4) gegenüberliegenden, Seite der Führungsteil (2) eine ebenfalls in axialer Richtung verlaufende zweite Führung (5) aufweist, wobei der Führungsteil (2) im mittleren Abschnitt des Werkzeughalters (1) angeordnet ist und an der zweiten Führung (5) ein in der Werkzeughalteraufnahmevorrichtung (8) in Richtung der zweiten Führung (5) verschiebbar angeordneter Spannkeil (9) eingreift, dadurch gekennzeichnet, daß die zweite Führung (5) als Führungsnut ausgebildet ist und der hintere Abschnitt des Werkzeughalters (1) als ein Schaft (3) ausgebildet ist, an dem eine Längenarretierung (13) angeordnet ist, deren hintere Fläche einen vertikalen Längensitz (14) bildet, wobei die zum Einsatz kommende Schneidenkante des Werkzeugkopfes (10) zu dem Längensitz (14) in einem vorbestimmten Längenabstand (a) angeordnet ist und in die Längenarretierung (13) eine in der Werkzeughalteraufnahmevorrichtung (8) vertikal zur Längsachse des Werkzeughalters (1) verschiebbar angeordnete, feststellbare, bündig an dem Längensitz (14) anliegende Spannbacke (15) eingreift, wobei während des Spannvorganges die Spannbacke (15) vor dem Spannkeil (9) den Werkzeughalter (1) in seiner Lage fixiert.

2. Werkzeughalteraufnahmevorrichtung nach Anspruch 1, dadurch gekennzeichnet, daß der Führungsteil (2) des Werkzeughalters (1) einen rechteckförmigen Querschnitt besitzt.

3. Werkzeughalteraufnahmevorrichtung nach Anspruch 1, dadurch gekennzeichnet, daß die Längenarretierung (13) des Werkzeughalters (1) als eine Ausdrehung im Schaft (3) ausgebildet ist, deren vordere Seite konusförmig ist und deren hintere Seite durch den vertikalen Längensitz (14) gebildet ist.

4. Werkzeughalteraufnahmevorrichtung nach Anspruch 1 bis 3, dadurch gekennzeichnet, daß die Werkzeughalteraufnahmevorrichtung (8) ein Bearbeitungsmagazin (16) ist, in dem mehrere Werkzeughalter (1) mit den zugehörigen Spannkeilen (9) und Spannbacken (15) zusammengefaßt sind, wobei das Bearbeitungsmagazin (16) über eine Spannstelle (17) mit einem Maschinenkopf (18) verbunden ist.

5. Werkzeughalteraufnahmevorrichtung nach Anspruch 4, dadurch gekennzeichnet, daß das Bearbeitungsmagazin (16) an einer Revolverdrehmaschine oder einem NC-Automaten verwendet wird.

6. Werkzeughalteraufnahmevorrichtung nach Anspruch 4 und 5, dadurch gekennzeichnet, daß der seitliche Abstand (b) zwischen der zum Einsatz kommenden Schneidenkante des Werkzeugkopfes (10) und der in Längsrichtung verlaufenden Achse (19) entlang der Schaftmitte jedes Werkzeughalters (1) konstant ist.

7. Werkzeughalteraufnahmevorrichtung nach Anspruch 4 bis 6, dadurch gekennzeichnet, daß der Abstand (c) zwischen der Achse (19) eines jeden Werkzeughalters (1) sowie einem Referenzpunkt (20) konstant ist.

8. Werkzeughalteraufnahmevorrichtung nach Anspruch 1 bis 3, dadurch gekennzeichnet, daß die Werkzeughalteraufnahmevorrichtung (8) ein Fräskopf (21) ist, in dem mehrere Werkzeughalter (1) mit den zugehörigen Spannkeilen (9) und Spannbacken (15) zusammengefaßt sind.

9. Werkzeughalteraufnahmevorrichtung nach Anspruch 8, dadurch gekennzeichnet, daß die Werkzeughalter (1) in dem Fräskopf (21) in mehreren unabhängig voneinander spannenden Spannstellen gruppenweise zusammengefaßt sind.

10. Werkzeughalteraufnahmevorrichtung nach Anspruch 8 und 9, dadurch gekennzeichnet, daß die Werkzeughalter (1) durch die Spannkeile (9) entgegen der Fräsrichtung gespannt sind, wobei der Fräskopf (21) den Werkzeugkopf (10) von der hinteren Seite stützende Halterungen (22) aufweist.

11. Werkzeughalteraufnahmevorrichtung nach Anspruch 1 bis 10, dadurch gekennzeichnet, daß der Werkzeugkopf (10) des Werkzeughalters (1) eine Schneidplatte (11) aufweist.

12. Werkzeughalteraufnahmevorrichtung nach Anspruch 1 bis 11, dadurch gekennzeichnet, daß der Werkzeughalter (1) über den Spannkeil (9) sowie die Spannbacken (15) hydraulisch bzw. pneumatisch spannbar ist.

## Claims

1. Toolholder receptacle (8) with a toolholder (1) accommodated therein having a tool head (10) for a cutting tool, the toolholder (1) projecting into an opening in the said receptacle and being locked in terms of its movement in the axial direction by a coupling device, and also, for the purpose of avoiding rotary movement, having a guide part (2), on the underside of which is arranged a first guide (4) which runs in the axial direction and is in operative connection with a similar groove (6) in the toolholder receptacle (8), while on the side opposite to the first guide (4) the guide part (2) has a second guide (5), likewise running in the axial direction, the guide part (2) being arranged in the centre portion of the toolholder (1), and a chuck wedge (9), which is arranged in the toolholder receptacle (8) so as to be displaceable in the direction of the second guide (5), engaging on the second guide (5), characterized in that the second guide (5) is designed as a guide groove and the rear portion of the toolholder (1) is designed as a shank (3), on which a longitudinal detent (13) is arranged, the rear surface of which forms a vertical longitudinal seat (14), that cutting edge of the tool head (10) which is being used being arranged at a predetermined longitudinal distance (a) from the longitudinal seat (14), and a chuck jaw (15), which is arranged in the toolholder receptacle (8) so as to be vertically displaceable with respect to the longitudinal axis of the toolholder (1), which can be secured in position and which bears flush against the longitudinal seat (14), engaging in the longitudinal detent (13), the chuck jaw (15) in front of the chuck wedge (9) fixing the position of the toolholder (1) during the chucking operation.

2. Toolholder receptacle according to Claim 1, characterized in that the guide part (2) of the toolholder (1) has a rectangular cross-section.

3. Toolholder receptacle according to Claim 1, characterized in that the longitudinal detent (13) of the toolholder (1) is formed as a turned recess in the shank (3), the front side of which recess is conical and the rear side of which is formed by the vertical longitudinal seat (14).

4. Toolholder receptacle according to Claims 1 to 3, characterized in that the toolholder receptacle (8) is a machining magazine (16), in which a plurality of toolholders (1) are combined with the associated chuck wedges (9) and chuck jaws (15), the machining magazine (16) being connected via a chucking location (17) to a machine head (18).

5. Toolholder receptacle according to Claim 4, characterized in that the machining magazine (16) is used on a turret lathe or an NC automatic machine.

6. Toolholder receptacle according to Claims 4 and 5, characterized in that the lateral distance (b) between that cutting edge of the tool head (10) which is being used and the axis running in the longitudinal direction is constant along the shank centre of each toolholder (1).

7. Toolholder receptacle according to Claims 4 to 6, characterized in that the distance (c) between the axis of each toolholder (1) and a reference point (20) is constant.

8. Toolholder receptacle according to Claims 1 to 3, characterized in that the toolholder receptacle (8) is a milling head (21), in which a plurality of toolholders (1) are combined with the associated chuck wedges (9) and chuck jaws (15).

9. Toolholder receptacle according to Claim 8, characterized in that the toolholders (1) are combined in the milling head (21) in groups in a plurality of chucking locations which chuck independently of one another.

10. Toolholder receptacle according to Claims 8 and 9, characterized in that the toolholders (1) are chucked counter to the milling direction by the chuck wedges (9), the milling head (21) having holding devices (22) which support the tool head (10) from the rear side.

11. Toolholder receptacle according to Claims 1 to 10, characterized in that the tool head (10) of the toolholder (1) has a cutting tip (11).

12. Toolholder receptacle according to Claims 1 to 11, characterized in that the toolholder (1) can be chucked hydraulically or pneumatically via the chuck wedge (9) and the chuck jaws (15).

## Revendications

1. Dispositif de montage d'un porte-outil (8) dans lequel est logé un porte-outil (1) avec une tête d'outil (10) pour un outil de coupe, dans lequel le porte-outil (1) pénètre dans une ouverture (7) de celui-ci et est arrêté dans son mouvement par un dispositif de couplage en direction axiale, et présente une pièce de guidage (2) pour éviter un mouvement de rotation, sur la face inférieure de laquelle est disposé un premier guide (4) orienté en direction axiale, qui est en relation active avec une rainure analogue (6) dans le dispositif de montage d'un porte-outil (8), tandis que sur la face opposée au premier guide (4), la pièce de guidage (2) présente un deuxième guide (5) également orienté en direction axiale, dans lequel la pièce de guidage (2) est disposée dans le tronçon central du porte-outil (1) et qu'une clavette de serrage (9) disposée dans le dispositif de montage d'un porte-outil (8) de façon coulissante en direction du deuxième guide (5) s'engage dans le deuxième guide (5), caractérisé en ce que le deuxième guide (5) est constitué par une rainure de guidage et que le tronçon arrière du porte-outil (1) est constitué par une tige (3), sur laquelle est disposé un arrêt longitudinal (13), dont la face arrière forme un siège longitudinal vertical (14), dans lequel l'arête de coupe utilisée de l'outil de coupe (10) est disposée à une distance longitudinale (a) prédéterminée du siège longitudinal (14) et une mâchoire de serrage (15) placée à fleur du siège longitudinal (14), blocable, disposée dans le dispositif de montage d'un porte-outil (8) de façon coulissante verticalement par rapport à l'axe longitudinal du porte-outil (1), s'engage dans l'arrêt longitudinal (13), dans lequel, pendant l'opération de serrage, la mâchoire de serrage (15) fixe dans sa position le porte-outil (1) avant la clavette de serrage (9).

2. Dispositif de montage d'un porte-outil suivant la revendication 1, caractérisé en ce que la pièce de guidage (2) du porte-outil (1) possède une section transversale rectangulaire.

3. Dispositif de montage d'un porte-outil suivant la revendication 1, caractérisé en ce que l'arrêt longitudinal (13) du porte-outil (1) est constitué par une portée tournée dans la tige (3), dont la face avant est de forme conique et dont la face arrière est formée par le siège longitudinal vertical (14).

4. Dispositif de montage d'un porte-outil suivant l'une quelconque des revendications 1 à 3, caractérisé en ce que le dispositif de montage d'un porte-outil (8) est un chargeur d'usinage (16), dans lequel sont rassemblés plusieurs porte-outil (1) avec les clavettes de serrage (9) et les mâchoires de serrage (15) correspondantes, dans lequel le chargeur d'usinage (16) est relié à une tête de machine (18) par un point de serrage (17).

5. Dispositif de montage d'un porte-outil suivant la revendication 4, caractérisé en ce que le chargeur d'usinage (16) est utilisé sur un tour revolver ou un automate à commande numérique.

6. Dispositif de montage d'un porte-outil suivant la revendication 4 et 5, caractérisé en ce que la distance latérale (b) entre l'arête de coupe utilisée de la tête d'outil (10) et l'axe (19) orienté en direction longitudinale est constante le long du milieu de la tige de chaque porte-outil (1).

7. Dispositif de montage d'un porte-outil suivant l'une quelconque des revendications 4 à 6, caractérisé en ce que la distance (c) entre l'axe (19) de chacun des porte-outil (1) ainsi qu'un point de référence (20) est constante.

8. Dispositif de montage d'un porte-outil suivant l'une quelconque des revendications 1 à 3, caractérisé en ce que le dispositif de montage d'un porte-outil (8) est une tête de fraisage (21), dans laquelle plusieurs porte-outil (1) sont rassemblés avec leurs clavettes de serrage (9) et leurs mâchoires de serrage (15).

9. Dispositif de montage d'un porte-outil suivant la revendication 8, caractérisé en ce que les porte-outil (1) sont rassemblés dans la tête de fraisage (21) par groupes en plusieurs postes de serrage à serrage indépendant l'un de l'autre.

10. Dispositif de montage d'un porte-outil suivant la revendication 8 et 9, caractérisé en ce que les porte-outil (1) sont serrés par les clavettes de serrage (9) dans le sens contraire au sens de fraisage, la tête de fraisage (21) présentant des supports (22) soutenant la tête d'outil (10) par la face arrière.

11. Dispositif de montage d'un porte-outil suivant l'une quelconque des revendications 1 à 10, caractérisé en ce que la tête d'outil (10) du porte-outil (1) présente une plaquette de coupe (11).

12. Dispositif de montage d'un porte-outil suivant l'une quelconque des revendications 1 à 11, caractérisé en ce que le porte-outil (1) peut être serré par la clavette de serrage (9) ainsi que par les mâchoires de serrage (15) de façon hydraulique respectivement pneumatique.
